# EUROPEAN PATENT APPLICATION

(11) **EP 4 648 386 A1**
(43) Date of publication of application: **12.11.2025**
(21) Application number: 24305726.2
(22) Date of filing: 10.05.2024
(51) Int. Cl.: H04L 65/75, G06N 3/045, G06N 3/08, G06N 20/00, H04L 41/16, H04L 69/24

(54) **METHODS, ARCHITECTURES, APPARATUSES AND SYSTEMS FOR COMMUNICATING INPUT MEDIA DATA FOR INFERENCE AND INFERENCE OUTPUT RESULT DATA**

(71) Applicant: InterDigital CE Patent Holdings, SAS, 75017 Paris (FR)
(72) Inventor: ONNO, Stephane, 35760 SAINT GREGOIRE (FR); FILOCHE, Thierry, 35410 CHATEAUGIRON (FR); QUINQUIS, Cyril, 35520 MELESSE (FR)
(74) Representative: Interdigital

(57) **Abstract**

Procedures, methods, architectures, apparatuses, systems, devices, and computer program products for communicating input media for inference by an inference engine and post-processed output result data that is output from the inference engine, for media consumption. In a split inference model for processing media data, topologies may include local inference, e.g., on a user equipment, with remote media consumption, e.g., in a network, or remote inference with local media consumption, which may be negotiated between the user equipment and the network. Then, input media for inference and output result data are communicated between the user equipment and the network accordingly.

## Description

### BACKGROUND

The present disclosure is generally directed to the fields of communications, software and encoding, including, for example, to methods, architectures, apparatuses, systems related to transmitting input media data and inference result data.

### SUMMARY

There are disclosed embodiments of methods, as described in the following and as claimed in the appended claims.

There are disclosed embodiments of a device, as described in the following and as claimed in the appended claims.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 is a basic architecture where input media data and/or output data may need to be transferred from one endpoint to another endpoint and shows local data capture, local inference and remote data consumption;
FIG. 3 is a basic architecture where input media data and/or output data may need to be transferred from one endpoint to another endpoint and shows local data capture, remote inference and local data consumption;
FIG. 4 shows local inference and remote media consumption and transmission of output results data with related input media data;
FIG. 5 shows local inference and remote media consumption and out of band transmission of results data;
FIG. 6 shows remote inference and local media data capture and local media consumption;
FIG. 7 shows remote inference and local media data capture and local media consumption with remote overlay rendering; and
FIG. 8 is a flow chart of a method 800 according to an embodiment.

### DETAILED DESCRIPTION

### Acronyms and abbreviations

- AAC: Advanced Audio Coding
- AI: Artificial Intelligence
- BWT: Burrows-Wheeler Transform
- COCO: Common Objects in Context
- HEIC: High-Efficiency Image Container
- HMPG: MPEG-I haptics streamable binary coding format
- IMDI: Input Media Data information
- JPEG: Joint Photographic Experts Group
- FPS: Frames per Second
- MIHS: MPEG-I Haptic Stream
- ML: Machine Learning
- NLP: Natural Language Processing
- POS: Part of Speech
- RLE: Run-Length Encoding
- SSD: Single Shot Multibox Object Detector
- UE: User Equipment - see WTRU
- URL: Uniform Resource Locator
- WTRU: Wireless Transmit-Receive Unit - see UE

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

### Example Communications System

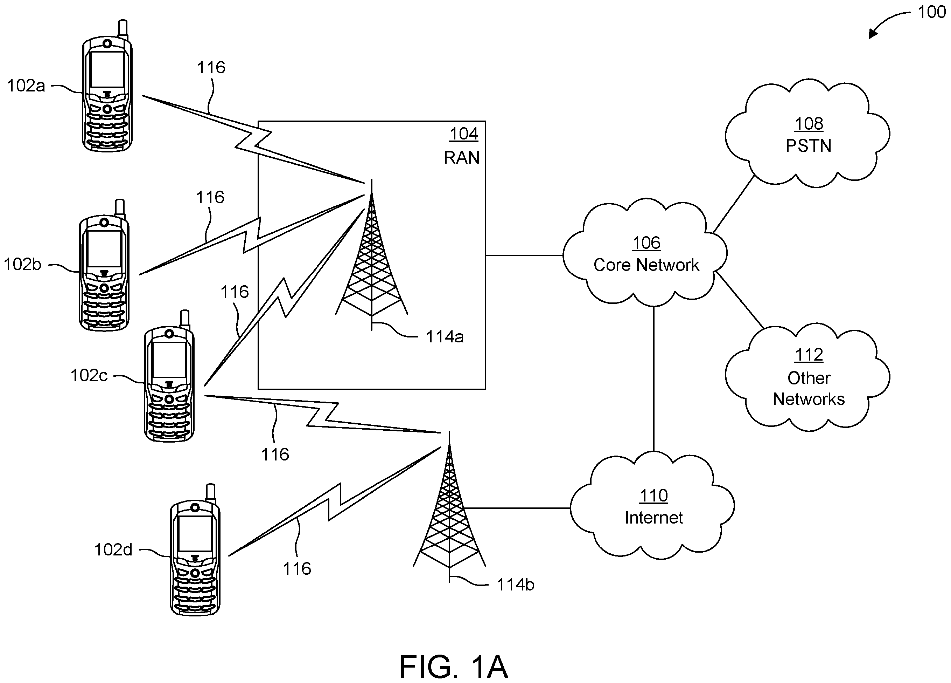

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

**FIG. 1A** is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

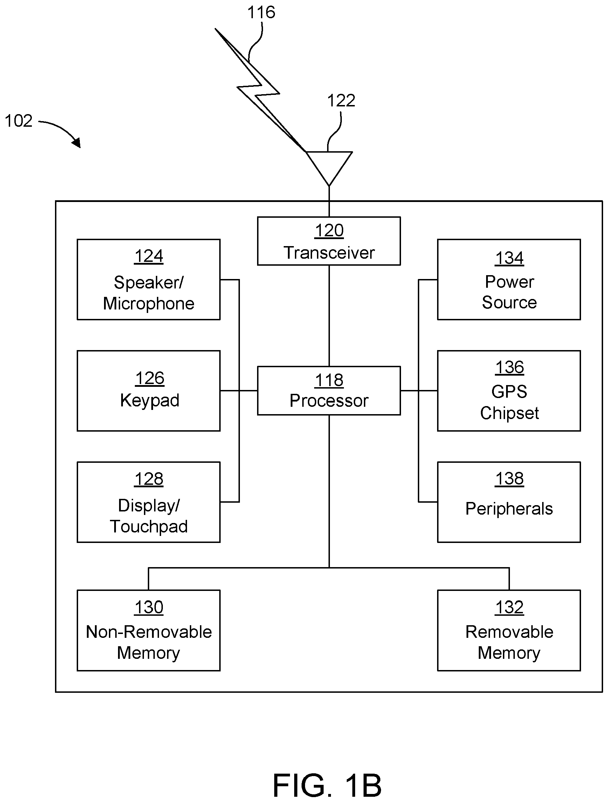

**FIG. 1B** is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

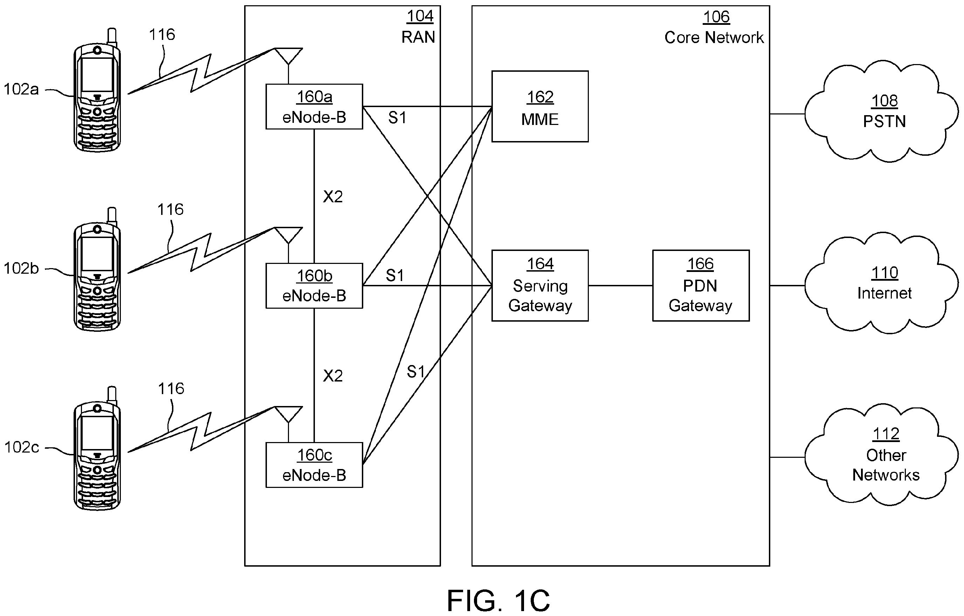

**FIG. 1C** is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11 af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

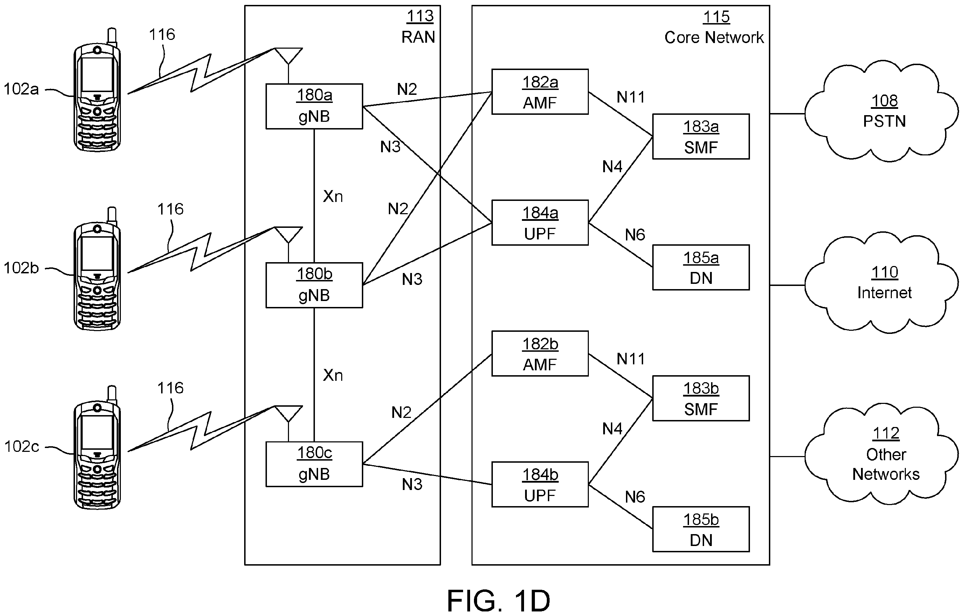

**FIG. 1D** is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the ON 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Introduction

### Execution of a Trained Model on Different Endpoints

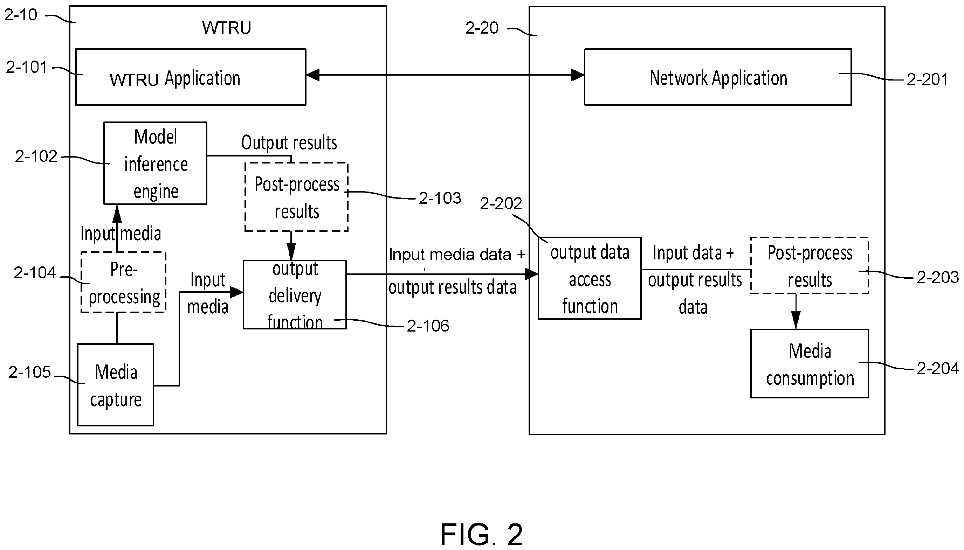

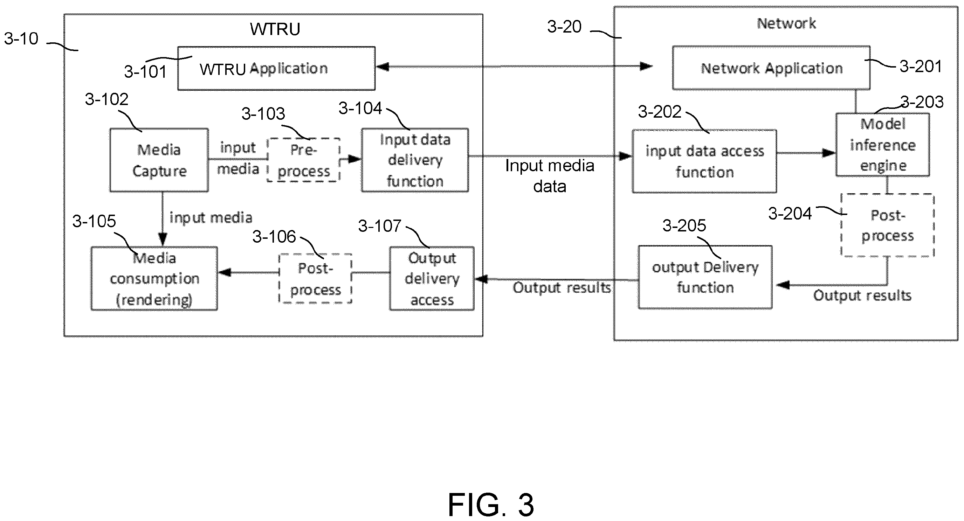

**FIG. 2** and **FIG. 3** show two different basic architectures for transferring input media data and/or output data from one endpoint (2-10 or 3-10) to another endpoint (2-20 or 3-20). FIG. 2 is a basic architecture where input media data and/or output data may need to be transferred from one endpoint to another endpoint and shows local data capture, local inference and remote data consumption. FIG. 3 is a basic architecture where input media data and/or output data may need to be transferred from one endpoint to another endpoint and shows local data capture, remote inference and local data consumption.

Pre-processing (2-104 or 3-103) may be required to adapt input media to the model inference engine. Conversely, post-processing (2-103 or 2-203/3-106 or 3-204) may be required to adapt the output data resulting of the inference to a media consumption (2-204 or 3-105) function. Note that, for example, during the post-processing the output result data of the inference (such as, for example, coordinates of a bounding boxes, labels) is transformed into standardized/normalized coordinates, or potentially in images with the bounding box.

### Examples of Media Consumption Operations with Input Media Data

For media data to be consumed (2-204 or 3-105), media data consumption operations may require output media result data to be generated from input media data. A post-processing (2-103 or 2-203 or 3-106 or 3-204) operation may be required before the data is sent to the media consumption function.

### Examples of Pre-processing Operations with Input Media Data

Pre-processing (2-104 or 3-103) may include all operations that may be required for adapting media data to input media data for the model inference engine (2-102, 3-203). The model inference engine is a function of the AI/ML framework as defined in further section 'Example of pre-processing operations with input media data'. In the context of the present document, the AI/ML framework may for example be Tensorflow, PyTorch, or ONNX.

Pre-processing operations may be part of an embedded function of an AI application.

### Examples of Pre-processing Operations with Input Media Data: Framework Adaptation

Framework adaptation within this context may comprise:
a) Converting media data to tensor format required by the AI/ML framework used (e.g., Numpy array, Pytorch tensors). Note that in this machine learning context, tensors can be scalar, multi-dimension arrays or a matrices. The tensor is thus a structure that contains the data to feed the AI/ML model (input). The AI/ML model can produce tensors as final results;
b) Tensor reshaping to adapt the required input tensor shape input inference data; and
c) Tensor conversion.

### Examples of Pre-processing Operations with Input Media Data: Object detection Tasks

Image and video adaptation:
a) Format adaptation such as rescaling, orientation, segmentation, centred to a point of interest;
b) color correction;
c) light adjustment for an image or a video segment;
d) image sampling, or motion correction for video.

### Examples of Pre-processing Operations with Input Media Data: Natural Language Processing (NLP) Task

Text analysis, removal or changing text:
a) text cleaning removing punctuation, extra spaces, non-word characters, stop words;
b) stemming, meaning reducing words to its word stem;
c) lemmatization, i.e., a process to reduce different forms of a word to a single form;
d) tokenization, i.e., converting a sequence of text into smaller said token parts;
e) standardization of words by lowercasing;
f) part-of-speech (POS) tagging, i.e., categorizing a word in a text (e.g. noun, verb).

### Examples of Post-processing Operations with Output Results

Post-processing (2-103, 2-203, 3-204, 3-106) fully depends on the AI/ML model used for the inference process.

Post-processing, within the context of output results, is the transformation of output inference result, combining the different partial results data (e.g. Pytorch tensors) to a media output representation (text/image/video) depending on the AI application (classification, segmentation, Natural language Processing (NLP), super resolution etc.).

### Examples of Post-processing Operations with Output Results: Object detection Tasks

In an example object detection, predictions may comprise several partials results P1, P2, P3, wherein:
P1 may represent bounding box coordinates surrounding a detected object (e.g., expressed in Top x, Top y, Width, Height in pixel values);
P2 may be an identifier (e.g., 1 for Person, 3 for Car) corresponding to a label of the object (known in the ground truth);
P3 may be the confidence score of the detection (e.g., from 0 to 1); for SSD ResNet (a pre-trained image classification network that is used as a feature extractor in SSD; SSD is a method for detecting objects in an image with bounding boxes) the bounding box is expressed in Top x, Top y, Bottom X, Bottom Y with values from 0 to 1 (e.g., means top x=0 top y=0 is the upper left and
top x=1 top y=1 is the bottom right).

A post-processing operation may be required to standardize various outputs and to calculate a final/consolidated/aggregated result from the three predictions P1, P2, P3.

For example, for P1 representing bounding box coordinates:
a) coordinates of an output model may be expressed in pixels (640), or in a fraction of the width (0.5 meaning 640 if width equals 1280);
b) some models may give (x,y) of the top, left point of the box, and (x,y) of the bottom, right point of the bounding box), other may give (x,y) of the top, left point of the box, and (width,height) to reach the bottom, right point of the bounding box starting from the top left point.

For example, for P2, label identifier:
a) value can vary from 0 to 999, or from 1 to 1000, for a same reference (e.g. COCO dataset; COCO is a large-scale image recognition dataset for object detection, segmentation, and captioning tasks);
b) models may have a dataset that include another one (for example a dataset with 1200 references, with the same 1000 first references as COCO dataset). In this case we can keep values below 1000, and remove others, to be able to compare various models results.

The post process may use a threshold to keep only meaningful results among all results. For example, the post-process may only keep the predictions P1, P2 where the confidence score P3 is above 0.4.

### Examples of Post-processing Operations with Output Results: Natural language Processing (NLP) task

A simple post-processing consists of using a threshold to only keep meaningful results e.g., only those results which confidence score > 0.4.

In addition, post-processing for NLP tasks may comprise:
a) stemming / lemmatization: a way to reduce words to their root, e.g. verb+ing (mount+ing=mounting), verb+ed (mount+ed= mounted), to+verb (to mount). This enables a standardized comparison of various outputs of various NLP models;
   text segmentation: breaks down a long text into smaller sentences to ease a further process like sentiment analysis;
   aggregated sentiment analysis: aggregation of the sentiment over several sentences to give a sentiment for a whole text;
   aggregated data analysis: aggregation of grammatical statistics over multiple sentences in order to provide statistics for a whole text.

### Overview

Output results from inference (from an inference process operated by a model inference engine) need to be post-processed in a post-processing stage to provide inference results (result data) that are usable or playable for media consumption. When output results are shared between two endpoints, the post-processing operation can be performed on either side. The output result data that needs to be transferred, depends on where (on which side, WTRU or network side) the post-processing takes place.

Figures 2 and 3 discussed previously show examples of local and remote inference where results and related input media data is to be shared between different endpoints. Input media data and output result data synchronization issues arise, notably regarding how the input media data and the output result data are transmitted, and how this data is synchronized when the data originates from different communication means (different paths).

Embodiments described further on in the present document relate, among others and non exclusively, to:
a) how to determine whether the post-processing stage, required before media consumption, is performed in the first or in the second endpoint;
b) how to select the transmission of results regarding related input media data;
c) how to transmit and carry the results to related input media data when these results are required for media consumption, wherein the 'carry' part may refer to the definition of a structure according to embodiments;
d) how to transmit the results to related input media data regarding the negotiated conditions;
e) How to carry the results to related input media data when these results are required; and
f) How to combine output results data to related input media data when results and input media data are transmitted via different communication channels. Note that when the inference process is done, the results are shown on the image, for example using a bounding box around an object, or a label attached to an object. Then, the results and the display are to be synchronized. As the inference data and the display data may take different paths, these are to be synchronized (combined).

The embodiments described hereafter provide, among others and not exclusively, a format for the transmission of result and corresponding input media data from a local endpoint to a remote endpoint, depending on where the media is consumed and what related input media data is required. This provides, among others and non exclusively, the benefit of a same format structure relevant for different application setup on media consumption and/or post-processing operations to carry outputs results, processed or not, with or without, input media data or input media data information.

The embodiments described hereafter provide, among others and non-exclusively, a way to synchronize data when results are sent out-of-band regarding corresponding input media data. For example, media input media data may be compressed and transmitted as a whole sequence while output results data from inference may be sent on a frame basis.

### Description of Embodiments - Summary

The embodiments disclosed in the present document comprise, among others and non-exclusively, the following steps, which are applied for different local and remote inference settings (a-f):
a) negotiation on which endpoint the post-processing is performed;
b) negotiation on output results data and the related input media data to transmit, depending on the negotiation where post processing is performed (b1-b3):
   b1) output results data may comprise Input Media Data Information (IMDI);
   b2) related input media data may comprise IMDI;
   b3) transmitted output results may be post-processed or not;
c) negotiation of output results data and related input media data delivery (c1-c2):
   c1) in the same communication channel or transmitted out-of-band;
   c2) via endpoint servers or external servers to be referenced e.g., using an URL.
d) definition of the format for input media data and output results data transmitted from one endpoint to another endpoint;
e) inference loop operations including delivery and access of transmitted input media data or output results data regarding negotiated operations and format structure defined; and
f) synchronization of output results data and related input media data in case of out-of-band transmission.

### Embodiments - Detailed Description

### Embodiments - Detailed Description: Common Negotiation to Local and Remote Inference

Part of a negotiation common to local and remote inference cases are, for example:
a) a negotiation whether the post-processing (4-105 or 5-105, 4-204 or 5-203 for local inference; 6-107 or 6-204 or 7-204 for remote inference) is performed in the first (4-10, 5-10, 6-10, 7-10) or in the second endpoint (4-20, 5-20, 6-20, 7-20). Note that `local' inference is performed on the 'client' (WTRU) side with its own AI/ML capabilities, whereas 'remote' inference is performed at the network side, e.g., in the cloud, in the edge, or in another endpoint;
b) a negotiation whether the delivery mode is in-band or out-of-band for transmission of output results data and related input media data from endpoint to another endpoint;
c) a negotiation whether external delivery originates from servers or from a local endpoint:
   c1) to send the data (i.e., input media data or output result data); or
   c2) to send reference to the data to transmit, for example a data media URL from:
      c2a) an endpoint server (4-10, 5-10, 6-10, 7-10); or
      c2b) an ingest server (4-11, 5-11) where the receiver endpoint server pulls the data; or
      c2c) an egest server (4-21, 5-21) where the transmit endpoint server pushes data.
d) a negotiation the output results data format and the related input media data format, depending on the above negotiation.

### Embodiments - Detailed Description: Local Inference and Remote Media Consumption

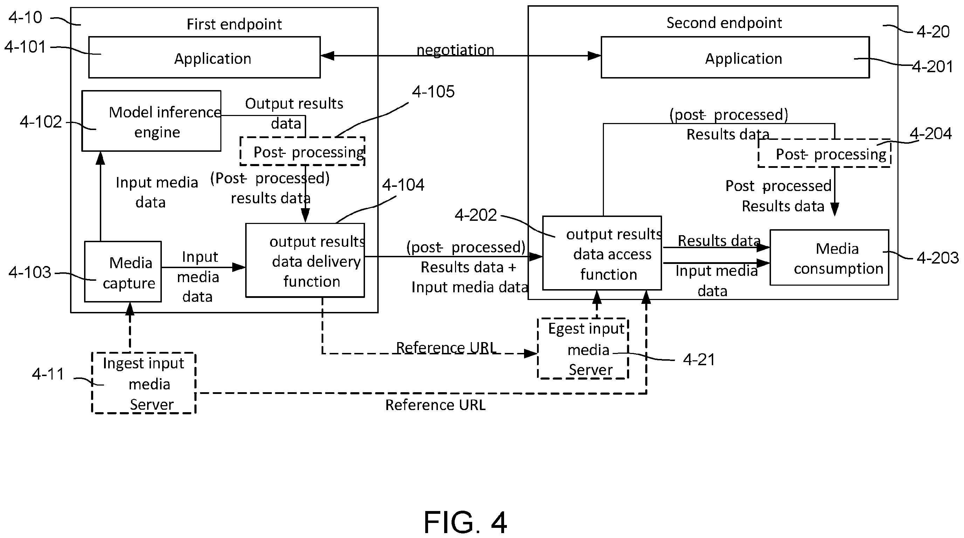

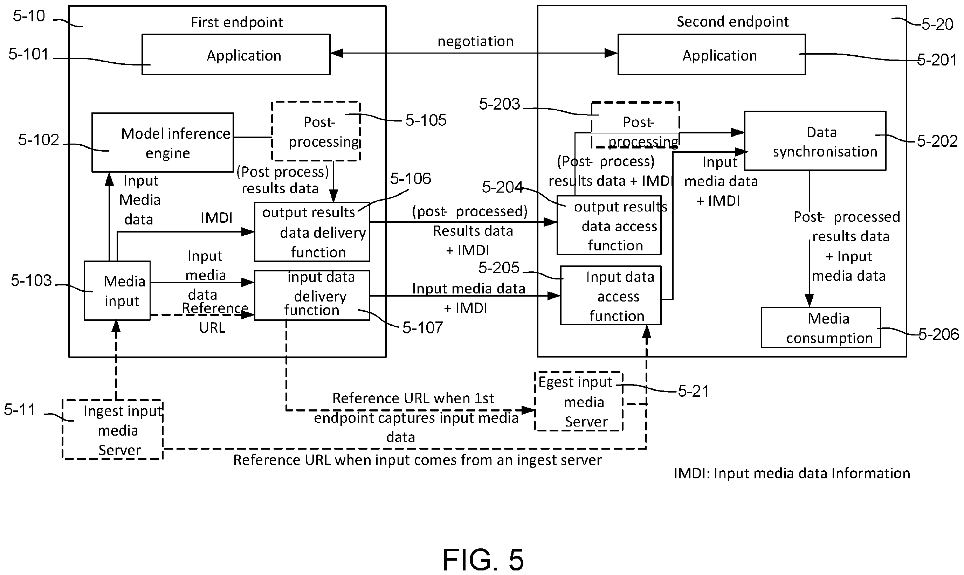

**FIG. 4** shows local inference and remote media consumption and transmission of output results data with related input media data, and **FIG. 5** shows local inference and remote media consumption and out of band transmission of results data.

Operations that may be performed at the local inference endpoint 1 (4-10 or 5-10) according to the following steps:
1) pass (send, transmit) input media data for inference (4-103 to 4-102, or 5-103 to 5-102);
2) infer input media data (4-102 or 5-102);
3) post-process results if post-processing was negotiated (4-105 or 5-105);
4) encapsulate and transmit output data results (4-104) and related input media data according to the negotiation mode, to remote endpoints. An alternative is to obtain data via an ingest, egest or endpoint server and encapsulation may include a reference link to the corresponding server:
   4a) in-band mode (see Figure 4): output results data (post-processed or not) with input media data via the Output results data delivery function (4-104).
   4b) out-of-band mode (see Figure 5):
      4b1) output results data (post-processed or not) with related IMDI via Output results data delivery function (5-106);
      4b2) input media data with related IMDI via Input data delivery function (5-107).

Operations that may be performed at remote endpoint 2 (4-20 or 5-20) according to the following steps:
5) receive and decapsulate output data results and related input media data according to the negotiation mode to local endpoints. An alternative is to obtain data via an ingest (4-11 or 5-11), egest (4-21 or 5-21) or endpoint server (4-10 or 5-10) and encapsulation may include a reference link to the corresponding server:
   5a) in-band mode (see Figure 4): output results data (post-processed or not) with input media data via the Output results data access function (4-202);
   5b) out-of-band mode (see Figure 5):
      5b1) output results data (post-processed or not) with related IMDI via Output results data access function (5-204);
      5b2) input media data with related IMDI via Input data access function (5-205);
6) post-process the output results data if such was negotiated (5-203);
7) synchronize (5-202) input media data and post-processed results from respective IMDI if required, for example when transmitted out-of-band;
8) pass (send, transmit) the post-processed results and related/synchronized input media data to the media consumption function (5-206).

### Embodiments - Detailed Description: Remote Inference with Local Media Data Consumption

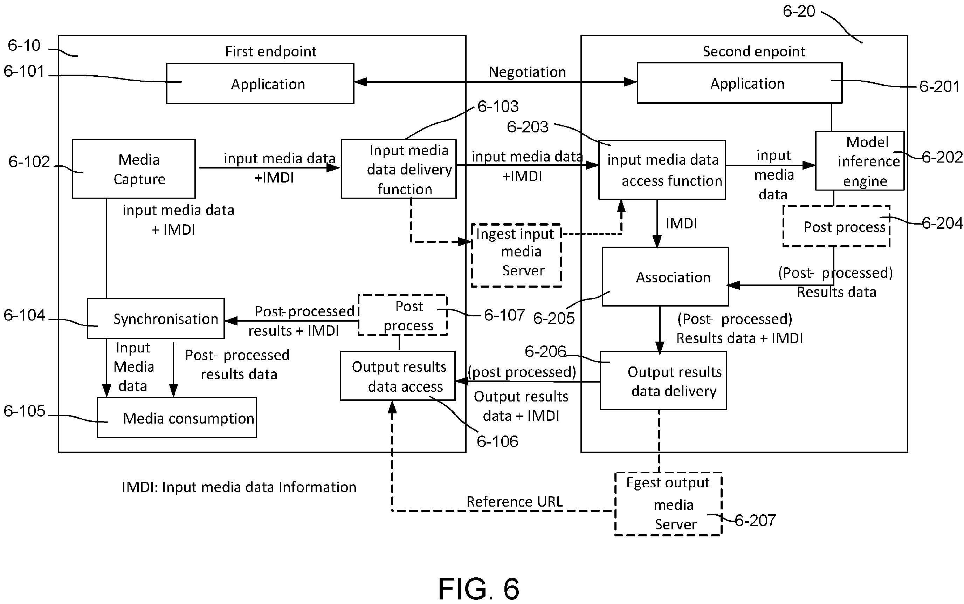

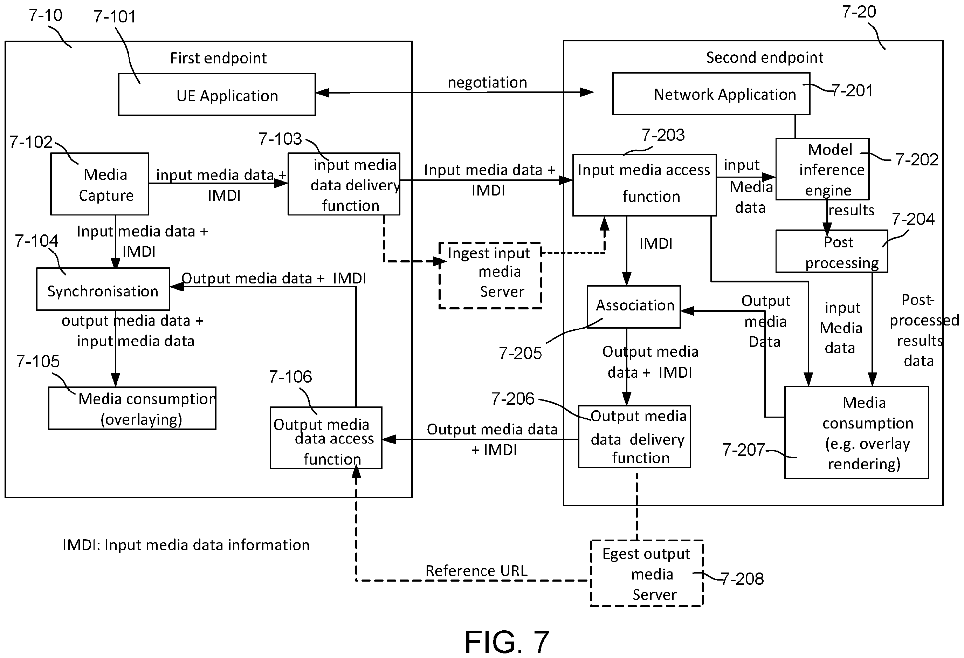

**FIG. 6** shows remote inference with local media data capture and local media consumption, and **FIG. 7** shows remote inference with local media data capture and local media consumption with remote overlay rendering.

Operations that may be performed at local endpoint 1 (6-10, 7-10):
a) capture input media data and generate IMDI (6-102, 7-102);
b) encapsulate and transmit input media data and IMDI according to input media format (6-103, 7-103).

Operations that may be performed at remote inference endpoint 2 (6-20, 7-20):
a) receive and decapsulate input media data and IMDI (6-203, 7-203).
b) pass (send, transmit) input media data for inference (6-202, 7-202).
c) infer input media data (6-202, 7-202).
d) post-process results if such was negotiated (6-204, 7-204).
e) pass (send, transmit) input media data and post-processed result to rendering operation if such was negotiated (7-207).
f) associate result data (post-processed or not) or output media data with IMDI depending on the negotiation (6-205, 7-205).
g) encapsulate and transmit (6-206, 7-206) output result data (post-processed or not) with related input media data (IMDI) to local endpoints. An alternative is to transmit via a egest server (6-207, 7-208) and encapsulation will include a reference link to the egest server:
   g1) output result data (post-processed or not) with IMDI via output results data delivery function (6-206);
   g2) output media data with IMDI via output media data delivery function (7-206).

Operations that may be performed at local endpoint 1 (6-10, 7-10):
a) receive and decapsulate results data or output media data results with related IMDI from remote endpoint. An alternative is to receive via a egest server (6-207, 7-208 and decapsulation will get the reference link to the egest server:
   a1) output result data (post-processed or not) with IMDI via output results data access function (6-106);
   a2) output media data with IMDI via output media data delivery function (7-106);
b) decapsulate inference results or output media data with IMDI (6-106);
c) post-process the result if such was negotiated (6-107);
d) synchronize input media data and post-processed results or output media layer data from respective IMDI (with 6-104 or 7-104);
e) pass post-processed results or output media data and related/synchronized input media data to the media consumption function (6-105 or 7-105);
f) consume media (6-105, 7-105) depending on the received data, for example apply an overlaying between input media data and relate output media layer data.

### Data Formats

### Transmitted Data Format: Input Media Data Information (IMDI)

Input media data information contains an identifier that uniquely identifies related input media data that the results refer to.

Input media data may be a media frame or a sequence of media frames (e.g. data image, sound samples, batch of images, video sequence, audio sequence etc..). Input media data information may comprise, for example:
a) a data identifier e.g. number;
b) an incremental data counter;
c) a data timestamp;
d) a frame identifier;
e) sequence information, for example (e1-e4):
   e1) a start sequence frame number;
   e2) an end sequence frame number;
   e3) a start sequence timestamp;
   e4) an end sequence timestamp.
   e5) a sequence duration.

### Transmitted Data Format: Common Media Data Format

A common media data format may be composed of, for example (a-g):
a) input media data information (IMDI, as defined above); and
b) media related information that may comprise, for example:
   b1) a media data type, e.g. (b1a-b1d):
      b1a) 'image';
      b1b) 'video sequence';
      b1c) 'audio sample';
      b1d) 'haptic samples';
      b1e) 'text';
c) a media data format:
   c1) a tensor dimension: e.g. [3,224,224];
   c2) a tensor element type: integer 32, integer 64, float, etc.;
   c3) a compression algorithm, e.g. (c3a-c3f):
      c3a) image: e.g. JPEG, WebP, HEIC;
      c3b) video: e.g. : e.g. H264/AVC, H265/HEVC, H266/VVC, VP9, AV1;
      c3c) video volumetric: e.g. V3C;
      c3d) audio: e.g. AAC, Wave, MP3;
      c3e) haptic: e.g. HMPG, MIHS;
      c3f) text: e.g. RLE, BWT, Huffman coding;
d) media transparency;
e) media type (e1-e3):
   e1) audio 2D/3D/Spatial;
   e2) image/video 2D/3D;
   e3) volumetric Type: Video Point Cloud, Immersive video;
f) media rate (f1-f2):
   f1) audio sample rate: e.g., 44,1 Khz, 48 khz, 96 khz;
   f2) video frame rate: e.g., 30, 60 FPS;
g) media data transport:
   g1) media data transport type: e.g. 'Data' or `URL';
   g2) media data payload length: e.g. 16 Mbytes;
   g3) data payload (g3a-g3b):
      g3a) Media data bitstream; or
      g3b) url text.

### Transmitted Data Format: Input Media Data Format

The input media data format is a format for encapsulating or encoding input media data for inference.

The input result data format structure may comprise, for example:
a) a structure name identifier = 'input media data format';
b) a common media data format structure (as defined above);

### Transmitted Data Format: Output Results Data Format

The output results data transmission format consists of a format encoding the output results data.

The data format structure may comprise, for example:
a) a structure name identifier = 'output results data format';
b) a common media data format structure;
c) a specific output result format.
d) a post processed flag;
e) an element type: e.g. int/float/string;
f) a value: e.g. accuracy value, confidence value, quality element value;
g) an element list: e.g. bounding box coordinates, textual string for NLP.

### Transmitted Data Format: Output Media Data Format

The output media data format is a format for encapsulating or encoding the output media data resulting from a consumption function in a first endpoint (7-10) and transmitted to a second point (7-20), for example according to FIG. 7 for overlaying input media data with a received output media data.

The output media data format structure may comprise, for example:
a) a structure name identifier = 'output media data format';
b) a common media data format structure.

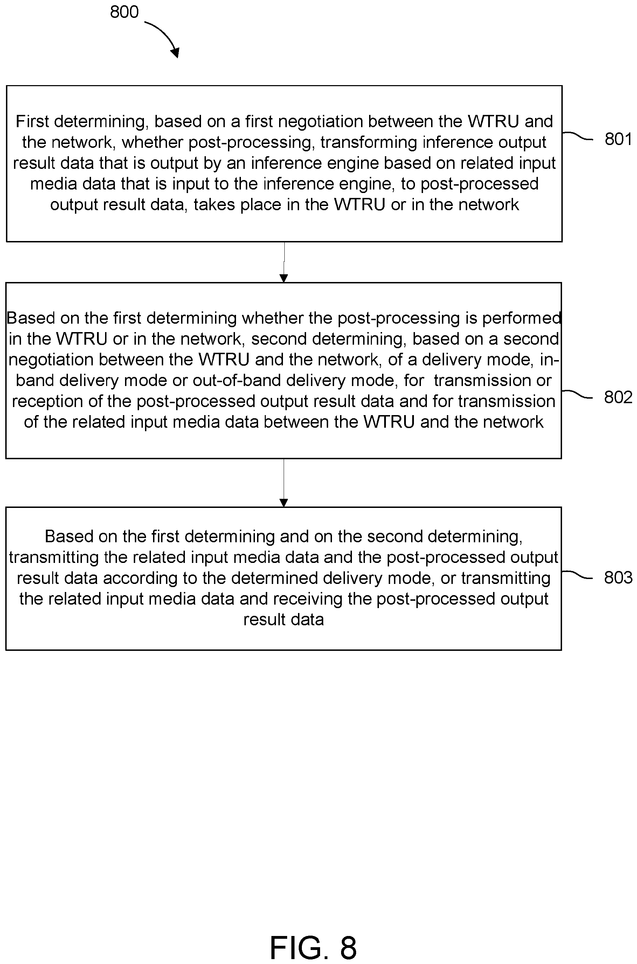

**FIG. 8** is a flow chart of a method 800 according to an embodiment.

The method 800 for communicating input media data and post-processed inference output result data may be implemented by a WTRU in a network. The method may comprise:

first determining (801), based on a first negotiation between the WTRU and the network, whether post-processing, transforming inference output result data that is output by an inference engine based on related input media data that is input to the inference engine, to post-processed output result data, takes place in the WTRU or in the network;

based on the first determining whether the post-processing is performed in the WTRU or in the network, second determining (802), based on a second negotiation between the WTRU and the network, of a delivery mode, in-band delivery mode or out-of-band delivery mode, for transmission or reception of the post-processed output result data and for transmission of the related input media data between the WTRU and the network; and

based on the first determining and on the second determining, transmitting (803) the related input media data and the post-processed output result data according to the determined delivery mode, or transmitting the related input media data and receiving the post-processed output result data.

For example, if the post-processing is negotiated to take place in the WTRU, see figures 4 and 5 (e.g., in the first endpoint) and not in the network (e.g., in the second endpoint), the delivery mode of the post-processed inference output result data may be transmitted either according to the in-band transmission mode (i.e., together), or according to the out-of-band (separated) transmission mode; whereas, if the post-processing is negotiated to take place in the network, see figures 6 and 7, the input media data is transmitted to the network and the post-processed inference output result data is received from the network by the WTRU.

According to an embodiment of the method, in the in-band delivery mode, the post-processed output result data and the related input media data are transmitted in a same communication channel, and wherein, in the out-of-band delivery mode, the post-processed output result data and the related input media data are transmitted in different communication channels.

According to an embodiment of the method, the inference output result data that is output by the inference engine is in a form of tensors.

According to an embodiment of the method, the post-processed output result data for media consumption is one or more of text, image, audio and video.

According to an embodiment of the method, the related input media data is associated with input media data information, IMDI, the IMDI comprising an identifier that uniquely identifies the related input media data that the post-processed output result data refers to.

According to an embodiment of the method, the IMDI is associated with a media frame or associated with a sequence of media frames, the IMDI comprising one or more of:
a data identifier of the media frame;
an incremental data counter of the media frame;
a data timestamp of the media frame;
a media frame identifier of the media frame;
a start timestamp of the sequence of media frames;
an end timestamp of the sequence of media frames; and
a sequence duration of the sequence of media frames.

There is also disclosed and described a wireless transmit-receive unit, WTRU, in a network. The WTRU comprising at least one processor configured to:
determine, based on a first negotiation between the WTRU and the network, whether post-processing, transforming inference output result data that is output by an inference engine based on related input media data that is input to the inference engine, to post-processed output result data for media consumption, takes place in the WTRU or in the network;
based on whether the post-processing is performed in the WTRU or in the network, determine, based on a second negotiation between the WTRU and the network, a delivery mode, in-band delivery mode or out-of-band delivery mode, for transmission of the post-processed output result data for media consumption and for transmission of the related input media data between the WTRU and the network; and
based on whether the post-processing is performed in the WTRU or in the network and based on the determined delivery mode, transmit the related input media data and the post-processed output result data to the network according to the determined delivery mode, or transmit the related input media data to the network and receive the post-processed output result data from the network.

According to an embodiment of the WTRU, in the in-band delivery mode, the post-processed output result data and the related input media data are transmitted in a same communication channel, and wherein, in the out-of-band delivery mode, the post-processed output result data and the related input media data are transmitted in different communication channels.

According to an embodiment of the WTRU, the inference output result data that is output by the inference engine is in a form of tensors.

According to an embodiment of the WTRU, the post-processed output result data for media consumption is one or more of text, image, audio and video.

According to an embodiment of the WTRU, the related input media data is associated with input media data information, IMDI, the IMDI comprising an identifier that uniquely identifies the related input media data that the post-processed output result data refers to.

According to an embodiment of the WTRU, the IMDI is associated with a media frame or associated with a sequence of media frames, the IMDI comprising one or more of:
a data identifier of the media frame;
an incremental data counter of the media frame;
a data timestamp of the media frame;
a media frame identifier of the media frame;
a start timestamp of the sequence of media frames;
an end timestamp of the sequence of media frames; and
a sequence duration of the sequence of media frames.

### Conclusion

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of wireless communication capable devices, (e.g., radio wave emitters and receivers). However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, 6 or means-plus-function claim format, and any claim without the terms "means for" is not so intended.

## Claims

1. A method, implemented by a wireless transmit-receive unit, WTRU, in a network, the method comprising:
first determining, based on a first negotiation between the WTRU and the network, whether post-processing, transforming inference output result data that is output by an inference engine based on related input media data that is input to the inference engine, to post-processed output result data, takes place in the WTRU or in the network;
based on the first determining whether the post-processing is performed in the WTRU or in the network, second determining, based on a second negotiation between the WTRU and the network, of a delivery mode, in-band delivery mode or out-of-band delivery mode, for transmission or reception of the post-processed output result data and for transmission of the related input media data between the WTRU and the network; and
based on the first determining and on the second determining, transmitting the related input media data and the post-processed output result data according to the determined delivery mode, or transmitting the related input media data and receiving the post-processed output result data.

2. The method according to claim 1, wherein, in the in-band delivery mode, the post-processed output result data and the related input media data are transmitted in a same communication channel, and wherein, in the out-of-band delivery mode, the post-processed output result data and the related input media data are transmitted in different communication channels.

3. The method according to claim 1 or 2, wherein the inference output result data that is output by the inference engine is in a form of tensors.

4. The method according to any of claims 1 to 3, wherein the post-processed output result data for media consumption is one or more of text, image, audio and video.

5. The method according to any of claims 1 to 4, wherein the related input media data is associated with input media data information, IMDI, the IMDI comprising an identifier that uniquely identifies the related input media data that the post-processed output result data refers to.

6. The method according to claim 5, wherein the IMDI is associated with a media frame or associated with a sequence of media frames, the IMDI comprising one or more of:
a data identifier of the media frame;
an incremental data counter of the media frame;
a data timestamp of the media frame;
a media frame identifier of the media frame;
a start timestamp of the sequence of media frames;
an end timestamp of the sequence of media frames; and
a sequence duration of the sequence of media frames.

7. A wireless transmit-receive unit, WTRU, in a network, the WTRU comprising at least one processor configured to:
determine, based on a first negotiation between the WTRU and the network, whether post-processing, transforming inference output result data that is output by an inference engine based on related input media data that is input to the inference engine, to post-processed output result data for media consumption, takes place in the WTRU or in the network;
based on whether the post-processing is performed in the WTRU or in the network, determine, based on a second negotiation between the WTRU and the network, a delivery mode, in-band delivery mode or out-of-band delivery mode, for transmission of the post-processed output result data for media consumption and for transmission of the related input media data between the WTRU and the network; and
based on whether the post-processing is performed in the WTRU or in the network and based on the determined delivery mode, transmit the related input media data and the post-processed output result data to the network according to the determined delivery mode, or transmit the related input media data to the network and receive the post-processed output result data from the network.

8. The WTRU according to claim 7, wherein, in the in-band delivery mode, the post-processed output result data and the related input media data are transmitted in a same communication channel, and wherein, in the out-of-band delivery mode, the post-processed output result data and the related input media data are transmitted in different communication channels.

9. The WTRU according to claim 7 or 8, wherein the inference output result data that is output by the inference engine is in a form of tensors.

10. The WTRU according to any of claims 7 to 9, wherein the post-processed output result data for media consumption is one or more of text, image, audio and video.

11. The WTRU according to any of claims 7 to 10, wherein the related input media data is associated with input media data information, IMDI, the IMDI comprising an identifier that uniquely identifies the related input media data that the post-processed output result data refers to.

12. The WTRU according to claim 11, wherein the IMDI is associated with a media frame or associated with a sequence of media frames, the IMDI comprising one or more of:
a data identifier of the media frame;
an incremental data counter of the media frame;
a data timestamp of the media frame;
a media frame identifier of the media frame;
a start timestamp of the sequence of media frames;
an end timestamp of the sequence of media frames; and
a sequence duration of the sequence of media frames.
